# EUROPEAN PATENT APPLICATION

(11) **EP 1 721 772 A2**
(43) Date of publication of application: **15.11.2006**
(21) Application number: 06010244.9
(22) Date of filing: 10.05.2006
(51) Int. Cl.: B60J 7/12, E05F 15/20

(54) **Safety system for the automatic opening/closing of a vehicle hood**

(30) Priority: 12.05.2005 IT MO20050115
(71) Applicant: Meta System S.p.A., 42100 Reggio Emilia (IT)
(72) Inventor: Simonazzi, Giuseppe, 42100 Reggio Emilia (IT)
(74) Representative: Brogi, Graziano

(57) **Abstract**

The safety system for automatically opening and closing a vehicle hood, comprises sensor means (2) associated with a vehicle featuring a hood (8) that opens and closes automatically and which are able to detect the presence of an obstacle close to or along the opening/closing trajectory of the hood (8) and which are associated with a control/piloting unit (3) for the operating means (4) of the hood (8).

## Description

This invention refers to a safety system for the automatic opening and closing of a vehicle hood.

In the case of a vehicle with an automatic hood, the opening and closing of the hood is by means of metal bars which enable movement; moreover, generally speaking, the hood features two retention fasteners for fastening to the windscreen.

Such elements, necessary to open/close and fasten the hood can generate hazardous situations for the people in the vicinity during opening and closing.

For example, both the metal support bars and the retention fasteners can crush or cut an obstacle in their path during opening/closing.

Finally, if the hood, when not used, is to be stored in a special rear compartment, this too can represent a hazard because the corresponding door could, during closing, crush any obstacle that comes within its range of movement.

In the field of safety systems for vehicles, solutions are already known that prevent any crushing due to window closing. Systems, for example, are known that control the power absorption and the speed of the motors provided to operate the windows which, correlated or not to the absolute position of the window, permit detecting an obstacle and interrupting closing by partially or totally reopening the window.

Alternatively, systems are also known made up of special seals, structurally identical to those normally used around the glass of windows of the doors of vehicles in order to seal out water which feature, along their entire length, two conductive parts which, in case of seal crushing, come into contact and close a circuit. Because the seals are very close to the glass, they ensure the closing of their contact if any obstacle comes in between.

Such systems cannot however be used in the case of the opening/closing of a hood, because the measurement of the variation in power absorption and closing speed could be affected, for example, also by environmental factors such as the wind. A sudden gust of wind is in fact enough to cause a considerable change in speed or absorbed power even in the absence of a real obstacle.

The solution of the special seal does not however solve the problem of obstacles hit by the metal bars without necessarily being crushed; without the crushing of the obstacle in fact between the metal bars and the windscreen, there is in fact no contact between the two conductive parts of the seal.

Such systems do not furthermore contemplate the possibility of identifying the presence of people near the vehicle and who could interfere with the opening/closing movement of the hood and thus put their safety at risk.

Finally, such systems do not provide for the possibility of automatically closing the vehicle, parked and without anyone on board, with the hood open, in the event of bad weather conditions such as, for example, rain and wind, or in the event of an attempt being made to break into the vehicle.

The aim which this invention sets itself is to eliminate the drawbacks complained of above by excogitating a safety system for automatically opening and closing a vehicle hood that permits ensuring the personal safety of the people inside or outside the vehicle, close to the area of movement of the hood and/or that of any hood containing compartment.

Another purpose of this invention is to excogitate a safety system that permits automatically opening and closing, in a correct manner, the hood of a vehicle and any hood containing compartment.

A further purpose of this invention is to excogitate a safety system able to modify its operation according to the instantaneous position of the hood and/or according to physical and environmental parameters.

Not the last purpose of this invention is to provide a safety system that is structurally simple and which requires a limited use of electronic components.

This aim and other purposes are achieved by this safety system for automatically opening and closing a vehicle hood, characterized by the fact that it comprises sensor means associated with a vehicle featuring a hood that opens and closes automatically and which are able to detect the presence of an obstacle close to or along the opening/closing trajectory of said hood and which are associated with a control/piloting unit for the operating means of said hood.

Conveniently, the safety system is also characterised by the fact that it features auxiliary sensor means able to detect the presence of an obstacle close to or along the closing trajectory of the closing door of the hood containing compartment and which are associated with an auxiliary control/piloting unit for the actuator means of said door.

Further characteristics and advantages of the invention will appear even more evident from the description of some preferred, but not exclusive, forms of embodiment of the safety system for the automatic opening and closing of a vehicle hood, illustrated by way of non limiting example in the attached drawings, wherein:
figure 1 is a diagram of the safety system architecture according to the invention;
figure 2 is a schematic side view of a vehicle featuring a first type of safety system sensor means according to the invention for detecting obstacles outside the vehicle;
figure 3 is a schematic plan view from above of the vehicle in figure 2;
figure 4 is a schematic side view of a vehicle featuring a second and third type of safety system sensor means according to the invention for detecting obstacles between the windscreen and the hood and between the retention points and
fasteners of the hood to the windscreen;
figure 5 is a schematic plan view from above of the vehicle in figure 4;
figure 6 is a schematic side view of a vehicle featuring a fourth type of safety system sensor means according to the invention able to detect the presence of obstacles inside the vehicle and positioned along the hood opening/closing trajectory;
figure 7 is a schematic plan view from above of the vehicle in figure 6;
figure 8 is a schematic plan view from above of a vehicle featuring a fifth type of safety system sensor means according to the invention able to detect the presence of obstacles inside the vehicle and positioned along the hood opening/closing trajectory;
figure 9 is a schematic plan view from above of a vehicle featuring auxiliary sensor means of the safety system according to the invention able to detect the obstacles positioned along the closing trajectory of the closing door of the hood containing compartment.

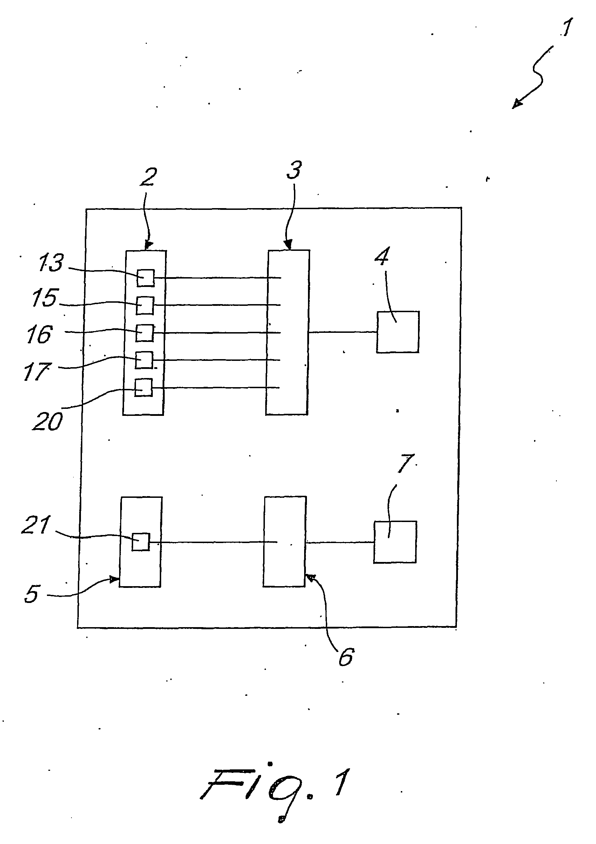

As schematically shown in figure 1, the safety system 1 for the automatic opening and closing of the vehicle hood comprises sensor means 2 which are associated with the vehicle and able to detect the presence of an obstacle close to or along the opening/closing trajectory of the hood and in communication with a control/piloting unit 3 for the operating means 4 of said hood.

In the event of the vehicle being equipped with a hood container compartment featuring a closing door for automatic opening/closing, the safety system 1 also comprises auxiliary sensor means 5 able to detect the presence of an obstacle close to or along the closing trajectory of such door and in communication with an auxiliary unit 6 for controlling/piloting the actuator means 7 of the door.

In a form of embodiment not shown the auxiliary unit 6 could be integrated in the unit 3.

Both the sensor means 2 and the auxiliary sensor means 5 can comprise at least one sensor selected from among the following types:
- ultrasonic,
- reflecting optical,
- beam-interruption bar optical,
- image processing optical,
- passive optical with pyrometric elements,
- with conductive plastic profile.

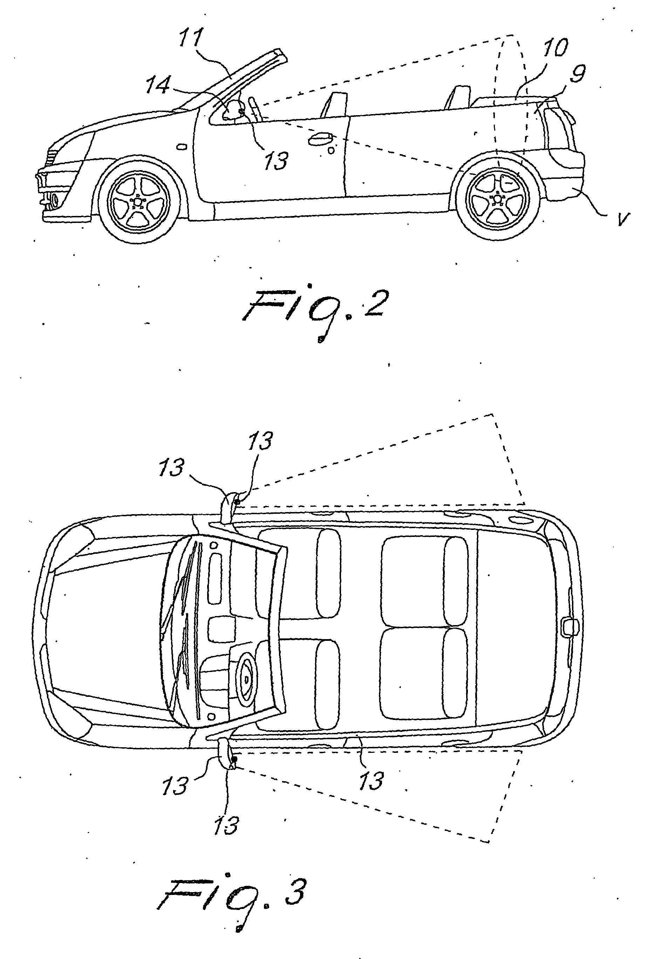

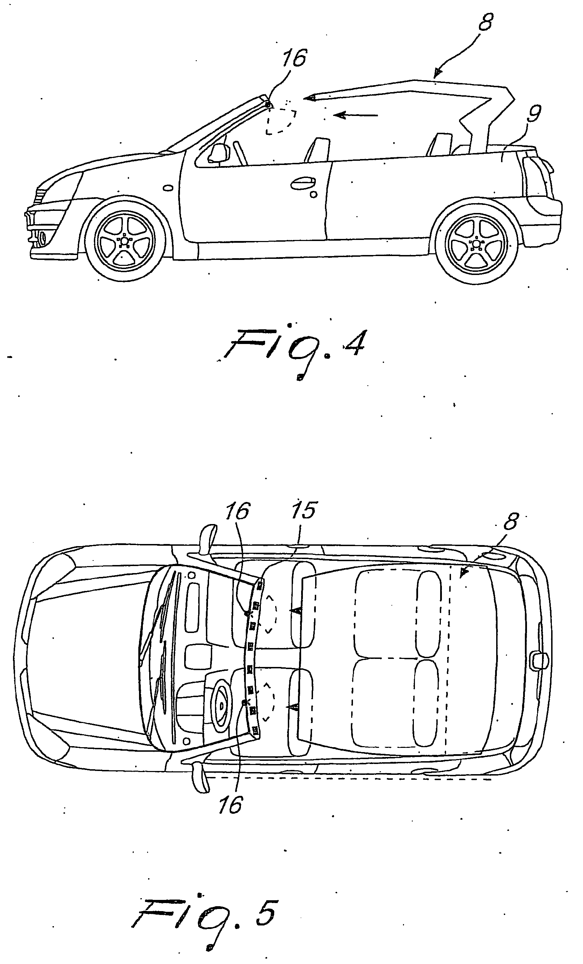

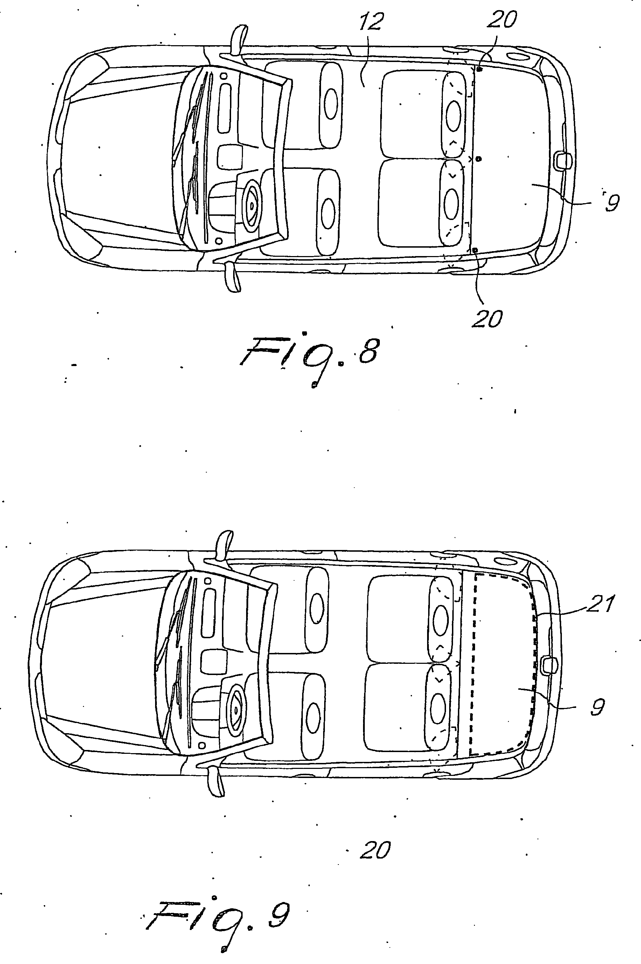

In figures 2 - 9, a vehicle V is schematically represented featuring an automatically opening and closing hood 8 and equipped with a hood container compartment 9 closed by a door 10 which also opens/closes automatically.

The hood 8, of conventionally known type, features fasteners at the front at predefined fastening points close to the upper edge of the windscreen 11 of vehicle V.

The sensor means 2 can be arranged close to the windscreen 11 and/or on the sides of vehicle V and/or close to the profile of the vehicle body delimiting the upper opening of the compartment 12 of the vehicle, so as to detect the presence of obstacles inside or outside the vehicle and able to interfere with the opening/closing trajectory of the hood 8.

The auxiliary sensor means 5 on the other hand can be arranged close to the vehicle body profile that delimits the upper opening of the compartment 9, so as to detect the presence of obstacles positioned along the closing trajectory of door 10.

A first type of sensor means 2 comprises, for example, a pair of ultrasonic sensors 13 of the receiver-transmitter type which are arranged along the sides of the vehicle V, preferably close to the side mirrors 14, and which are able to detect the presence of an obstacle outside vehicle V, such as, for instance, a person approaching the vehicle during opening/closing of the hood 8.

The ultrasonic sensors 13 are equipped with a receiver-transmitter transducer that transmits a sequence of impulses at a frequence that varies between 30 KHz and 200 KHz and receives the echo signal reflected off any obstacles in response.

Usefully the opening angle magnitude of the ultrasonic sensor 13 radiation pattern varies within a range of values between 30° and 50°.

Advantageously, the shape of said radiation pattern is of the asymmetric type, for example, oval-shaped, to fit the vehicle structure.

A second type of sensor means 2 comprises a sensor with conductive plastic profile 15 which is arranged along at least one section of the upper edge of the windscreen 11, where the front profile of hood 8 rests, when opened, and able to detect the presence of obstacles positioned between said edge and the hood 8.

The sensor with conductive plastic profile 15, of known type, is used as a watertight seal and, inside, features two conductive plastic straps which, in case of crushing, come into contact and close an electric circuit.

A third type of sensor means 2 comprises a pair of reflecting optical sensors 16 positioned by the fastening points of the two fasteners with which the hood 8 is provided at the front and which are defined close to the upper edge of the windscreen 11.

The reflecting optical sensors 16 are infrared sensors with compensation of ambient light according to the known technology HALIOS (High Ambient Light Independent Optical System); they produce a light beam which can be delimited by suitable reflectors and detect the light reflected off the fastening points of the hood 8 in movement.

The reflecting optical sensors 16 detect, therefore, the presence of obstacles positioned between the fastening points and the corresponding fasteners, thus interrupting the light beam reflected, such as for instance the hands of a person.

A fourth type of sensor means 2 comprises a bar optical sensor, or beam-interruption, 17 able to produce a radiation beam crossing at least one portion of the volume of the compartment 12 and able to detect the presence of an obstacle inside the vehicle V and interfering with the opening/closing trajectory of hood 8.

The bar optical sensor 17 is an infrared sensor and consists of a plurality of transmitters 18 (led or laser), arranged, for instance, along the profile of the windscreen 11, and a corresponding plurality of receivers 19 (phototransistors or photodiode), arranged along the profile of the vehicle body V delimiting at the rear the compartment 12.

The bar optical sensor 17 therefore produces a radiation beam F crossing at least one portion of the volume of the compartment 12; it detects the presence of possible obstacles inside the vehicle V interrupting one or more radiations of beam F and therefore can interfere with the opening/closing trajectory of hood 8. Such obstacles can be represented, for example, by people sitting on the front or rear seats of vehicle V and taking a position or moving so as to interfere with the opening/closing trajectory of hood 8.

A fifth type of sensor means 2 comprises a reflecting optical sensor 20 arranged close to the profile of the vehicle body V delimiting at the rear the compartment 12 and able to detect the presence of an obstacle inside the vehicle and interfering with the opening/closing trajectory of hood 8. Said reflecting optical sensor 20 prevents any possible break-in by people sitting on the rear seats of the vehicle along the opening/closing trajectory of hood 8.

The auxiliary sensor means 5 can comprise, for example, a sensor with conductive plastic profile 21 arranged along at least one portion of the profile of the vehicle body V delimiting the upper opening of compartment 9.

Like the sensor with conductive plastic profile 15, the sensor with conductive plastic profile 21, of known type, is used as a watertight seal and, inside, features two conductive plastic straps which, in case of crushing, come into contact and close an electric circuit. It detects, for example, the presence of possible obstacles positioned along the closing trajectory of door 10.

The sensor means 2 are able to dynamically modify their operation during the movement of hood 8 according to its starting time or position.

Furthermore, the sensor means 2 can modify their operation according to physical and environmental parameters.

Usefully the system 1 can be integrated in the antitheft device with which the vehicle V can be equipped.

Lastly, the system 1 is conceived in such a way that, if vehicle V is parked with the hood 8 open and bad weather conditions occur (rain, wind) or an attempt is made to break into the vehicle, the hood 8 is automatically closed.

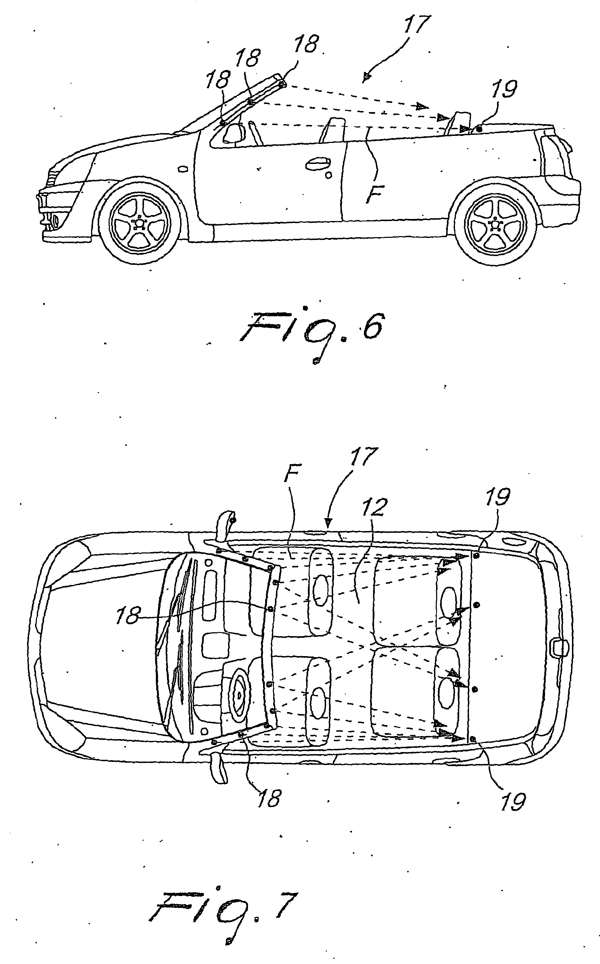

With particular reference to the form of embodiment shown in figures 6 and 7, the device according to the invention operates as follows.

Before starting the hood operating means 4 for automatic opening or closing hood 8, the unit 3 starts the sensor means 2, particularly consisting of the beam-interruption bar optical sensor 17.

In the event of an obstacle, during opening or closing hood 8, such as a passenger sitting inside the compartment 12 of vehicle V, being positioned along the trajectory of hood 8 thus interrupting the beam F produced by the bar optical sensor 17, said sensor sends a signal to the unit 3 which stops the operating means 4 blocking the hood 8.

The operation of other possible forms of embodiment of system 1 can be easily understood by the average skilled engineer.

In practice it has been found that the described system according to the invention can ensure the safety of people close to or inside a vehicle during the opening and closing phases of the hood and hood containing compartment, if any.

Furthermore, the system according to the invention ensures correct automatic opening/closing of the hood.

The invention thus conceived is susceptible to numerous modifications and variations, all of which falling within the scope of the inventive concept.

Furthermore all the details can be replaced with other elements.

In practice, the materials used, as well as the dimensions, may be any according to the requirements.

Therefore, the protection scope of the claims shall not be limited to the figures or preferred forms of embodiment illustrated in the description as examples, but the claims shall comprise all the characteristics of patentable novelty implied in this invention, included all the characteristics which would be treated as equivalent by a skilled engineer.

## Claims

1. Safety system for automatically opening and closing a vehicle hood, **characterized by** the fact that it comprises sensor means associated with a vehicle featuring a hood that opens and closes automatically and which are able to detect the presence of an obstacle close to or along the opening/closing trajectory of said hood and which are associated with a control/piloting unit for the operating means of said hood.

2. System according to claim 1, **characterized by** the fact that it comprises auxiliary sensor means able to detect the presence of an obstacle close to or along the closing trajectory of the closing door of said hood containing compartment and which are associated with an auxiliary control/piloting unit for the actuator means of said door.

3. System according to one or more of the preceding claims, **characterized by** the fact that at least one between said sensor means and said auxiliary sensor means comprises at least one sensor selected from among the following types:
- ultrasonic,
- reflecting optical,
- beam-interruption bar optical,
- image processing optical,
- passive optical with pyrometric elements,
- with conductive plastic profile.

4. System according to one or more of the preceding claims, **characterized by** the fact that said sensor means are arranged close to the windscreen of said vehicle and/or on the sides of said vehicle and/or close to the profile of the vehicle body delimiting the upper opening of the compartment of the vehicle itself.

5. System according to one or more of the preceding claims, **characterized by** the fact that said auxiliary sensor means are arranged close to the profile of the vehicle body delimiting the upper opening of said compartment.

6. System according to one or more of the preceding claims, **characterized by** the fact that said sensor means comprise at least one ultrasonic sensor of the receiver-transmitter type able to detect the presence of an obstacle outside the vehicle.

7. System according to one or more of the preceding claims, **characterized by** the fact that the opening angle magnitude of said ultrasonic sensor radiation pattern varies within a range of values between 30° and 50°.

8. System according to one or more of the preceding claims, **characterized by** the fact that the shape of the radiation pattern of said ultrasonic sensor is of the asymmetric type.

9. System according to one or more of the preceding claims, **characterized by** the fact that said sensor means comprise at least one sensor with conductive plastic profile arranged along at least one section of the upper edge of the windscreen of said vehicle and able to detect the presence of obstacles positioned between said edge and said hood.

10. System according to one or more of the preceding claims, **characterized by** the fact that said sensor means comprise at least one reflecting optical sensor positioned by each fastening point of the fasteners of said hood to the windscreen of said vehicle and able to detect the presence of obstacles positioned between said fastening points and said fasteners.

11. System according to one or more of the preceding claims, **characterized by** the fact that said sensor means comprise at least one (beam-interruption) bar optical sensor able to produce a radiation beam crossing at least one portion of the volume of the vehicle compartment and to detect the presence of an obstacle inside the vehicle and interfering with the opening/closing trajectory of said hood.

12. System according to one or more of the preceding claims, **characterized by** the fact that said sensor means comprise at least one reflecting optical sensor able to detect the presence of an obstacle inside the vehicle and interfering with the opening/closing trajectory of said hood.

13. System according to one or more of the preceding claims, **characterized by** the fact that said auxiliary sensor means comprise at least one sensor with conductive plastic profile arranged along at least one portion of the profile of the vehicle body delimiting the upper opening of the compartment closed by said door and able to detect the presence of an obstacle positioned along the closing trajectory of said door.

14. Safety system for automatically opening and closing a vehicle hood, **characterized by** the fact that it comprises sensor means able to detect the presence of an obstacle close to or along the closing trajectory of the closing door of said hood containing compartment and associated with a control/piloting unit for the operating means of said door.

15. System according to claim 14, **characterized by** the fact that said sensor means are arranged close to the profile of the vehicle body delimiting the upper opening of said compartment.

16. System according to claims 14 or 15, **characterized by** the fact that said sensor means comprise at least one sensor selected from among the following types:
- ultrasonic,
- reflecting optical,
- beam-interruption bar optical,
- image processing optical,
- passive optical with pyrometric elements,
- with conductive plastic profile.

17. System according to one or more of the claims from 14 to 16, **characterized by** the fact that said sensor means comprise at least one sensor with conductive plastic profile arranged along at least one portion of the profile of the vehicle body delimiting the upper opening of the compartment closed by said door and able to detect the presence of an obstacle positioned along the closing trajectory of said door.
